# EUROPÄISCHE PATENTANMELDUNG

(11) **EP 0 933 579 A2**
(43) Veröffentlichungstag der Anmeldung: **04.08.1999**
(21) Anmeldenummer: 99100799.8
(22) Anmeldetag: 18.01.1999
(51) Int. Cl.: F16L 37/084

(54) **Anschlussvorrichtung für Rohrleitungen**

(30) Priorität: 02.02.1998 DE 19803918
(71) Anmelder: Armaturenfabrik Hermann Voss GmbH + Co., 51688 Wipperfürth (DE)
(72) Erfinder: Brandt, Joself, 51688 Wipperfürth (DE); Hester, Hilmar, Wipperfürth (DE)
(74) Vertreter: Patentanwälte Dr. Solf & Zapf

(57) **Zusammenfassung**

Die vorliegende Erfindung betrifft eine Anschlußvorrichtung für Rohrleitungen, mit einem in einer Aufnahmebohrung (2) eines Gehäuseteils (4) angeordneten bzw. anzuordnenden Halteelement (6) mit über den Umfang verteilt angeordneten, widerhakenartig in den zum Einstecken der Rohrleitung (8) vorgesehenen Öffnungsquerschnitt ragenden, metallischen Klammerelemente (10), wobei das Halteelement (6) als einstückiges, im wesentlichen hülsenförmiges Metallblechformteil mit einem im wesentlichen hohlzylindrischen, einstückig mit den Klammerelementen (10) verbundenen Basisteil (12) ausgebildet ist.

## Beschreibung

Die vorliegende Erfindung betrifft eine Anschlußvorrichtung für insbesondere aus Kunststoff bestehende Rohrleitungen, mit einem in einer Aufnahmebohrung eines Gehäuseteils angeordneten bzw. anzuordnenden Halteelement mit über den Umfang verteilt angeordneten, widerhakenartig in den zum Einstecken der Rohrleitung vorgesehenen Öffnungsquerschnitt ragenden, metallischen Klammerelementen.

Die EP 0 592 823 A1 beschreibt einen gattungsgemäßen Steckverbinder für Kunststoff-Rohrleitungen, bei dem das Halteelement eine kombinierte Dicht- und Haltefunktion hat und dazu aus einem elastomeren Formring besteht, in den die metallischen Klammerelemente integriert sind. Diese Ausführung hat sich zwar funktionell bewährt, führt aber zu einem doch relativ großen Aufwand für die Herstellung des kombinierten Dicht- und Halteelementes. Zudem ist zur Aufnahme des speziellen Halteelementes eine recht aufwendige Bohrungskontur mit einer ringnutartigen Aufnahmekammer erforderlich, in der das Halteelement formschlüssig sitzt.

Eine ähnliche Rohrkupplung ist in der GB-A-1 550 624 beschrieben. Auch dabei ist innerhalb einer inneren Ringausnehmung ein kombiniertes Dicht- und Halteelement formschlüssig gelagert, wobei ein Federring mit zahnartigen Klammerelementen so in einen Dichtring integriert ist, daß die Klammerelemente zum Arretieren der Rohrleitung herausragen.

Des weiteren seien hier noch die EP 0 310 534 A1 und die GB-A-1 024 537 genannt, wobei allerdings in der letztgenannten Veröffentlichung Klammerelemente nicht mit einem Dichtring kombiniert sind, sondern mit einem gummielastischen Ringelement, um die Klammern mit einer radialen Vorspannkraft zu beaufschlagen. Zudem wirken hier die Klammerelemente nicht direkt gegen die glatte Umfangsfläche einer Rohrleitung, sondern sie hintergreifen einen äußeren Ringstegansatz eines speziellen Steckerteils.

Der vorliegenden Erfindung liegt die Aufgabe zugrunde, ausgehend von dem beschriebenen Stand der Technik eine gattungsgemäße Anschlußvorrichtung zu schaffen, die auf konstruktiv einfache und wirtschaftliche Weise einen schnellen Anschluß von im wesentlichen glattwandigen Rohrleitungen auch an Gehäuseteile mit einfachen, d. h. innenseitig im wesentlichen glattwandigen Aufnahmebohrungen ermöglicht.

Erfindungsgemäß wird dies dadurch erreicht, daß das Halteelement als einstückiges, im wesentlichen hülsenförmiges Metallblechformteil mit einem im wesentlichen hohlzylindrischen, einstückig mit den Klammerelementen verbundenem Basisteil ausgebildet ist. Dieses erfindungsgemäße Halteelement läßt sich sehr kostengünstig aus ursprünglich ebenem Blechmaterial (Federstahlblech) herstellen, indem jeweils ebene Zuschnitte hergestellt, insbesondere gestanzt und diese dann in ihre Hülsenform gebogen werden. Das Halteelement kann dann einfach in die Aufnahmebohrung eingesteckt bzw. gepreßt werden, zumal es aufgrund des verwendeten Blechmaterials mit geringer Wandstärke ausgebildet werden kann, so daß der Öffnungsquerschnitt der Aufnahmebohrung nur sehr unwesentlich eingeengt wird.

Zur ausreichenden Halterung auch in einfachen, innenseitigen glattwandigen Aufnahmebohrungen ist es vorteilhaft, wenn der Basisteil freigeschnittene oder freigesparte Haltezungen aufweist, die sich widerhakenartig schräg nach außen und in die der Einsteckrichtung entgegengesetzte Löserichtung gegen die Innenumfangsfläche der Aufnahmebohrung erstrecken, so daß sich diese Haltezungen im eingesetzten Zustand vorzugsweise unter Kerbwirkung geringfügig in das Material des Gehäuseteils eindrücken, wodurch im Grunde ein Formschluß, zumindest aber ein Kraftformschluß erreicht wird.

Die sich einstückig an den Basisteil anschließenden Klammerelemente greifen bevorzugt ebenfalls form- oder kraftformschlüssig in die eingesteckte Rohrleitung ein, und zwar insbesondere nach einer geringfügigen manuellen oder systemdruckbedingten Rückbewegung der Rohrleitung in Löserichtung, wodurch nämlich die Klammerelemente so elastisch verformt werden, daß sie durch Veränderung ihrer Schrägstellung mit ihren freien Kanten immer stärker gegen bzw. in die Rohrleitung gepreßt werden. Aufgrund der zuvor beschriebenen Halterung des erfindungsgemäßen Halteelementes innerhalb der Aufnahmebohrung wird somit auch eine sehr sichere Halterung der Rohrleitung insgesamt erreicht.

Die Haltekraft kann in einer vorteilhaften Weiterbildung der Erfindung noch wesentlich gesteigert werden. Hierzu ist vorzugsweise jedes Klammerelement auf seiner dem freien, zur Halterung der Rohrleitung dienenden Ende gegenüberliegenden Seite mit einem zungenartigen, sich schräg in Löserichtung und radial nach außen gegen die Innenumfangsfläche der Aufnahmebohrung erstreckenden Arretierelement verbunden. Jedes Klammerelement ist gemeinsam mit dem praktisch eine rückwärtige Verlängerung bildenden, zugehörigen Arretierelement um eine etwa in Umfangsrichtung verlaufende, durch eine Anbindungsstelle zum Basisteil bestimmte Drehachse derart verdrehbar, daß durch eine Bewegung der Rohrleitung in Löserichtung über die anliegenden Klammerelemente eine Verdrehung erfolgt, durch die die Arretierelemente fester gegen die Innenumfangsfläche der Aufnahmebohrung gedrückt werden. Hierdurch wird zusätzlich zur inneren Arretierung der Rohrleitung über die Klammerelemente gleichzeitig auch eine Arretierung radial nach außen gegen die Aufnahmeöffnung des Gehäuseteils erreicht, wobei die Klammer- und Arretierelemente durch eine Lösebewegung der Rohrleitung immer stärker verspannt werden, je höher die in diese Richtung auf die Rohrleitung wirkende Kraft ist. Da diese Kraft auch durch den inneren Systemdruck erzeugt wird, wird demzufolge vorteilhafterweise eine auch vom Systemdruck abhängige Halterung erreicht, wobei die Haltekraft mit steigendem Systemdruck selbsttätig ebenfalls entsprechend verstärkt wird.

Weitere vorteilhafte Ausgestaltungsmerkmale der Erfindung sind in den Unteransprüchen sowie der folgenden Beschreibung enthalten.

Anhand von in der Zeichnung veranschaulichten, bevorzugten Ausführungsbeispielen soll die Erfindung nun näher erläutert werden. Dabei zeigt:
- Fig. 1: im Längsschnitt eine erste Ausführungsform einer erfindungsgemäßen Anschlußvorrichtung mit eingesteckter Rohrleitung,
- Fig. 2: eine gesonderte und vergrößerte Darstellung nur des erfindungsgemäßen Haltelementes in einer Draufsicht entsprechend der Pfeilrichtung II gemäß Fig. 1,
- Fig. 3: einen Axialschnitt des Halteelementes in der Schnittführung III-III gemäß Fig. 2,
- Fig. 4: eine Detaildarstellung des Bereichs Y in Fig. 3,
- Fig. 5: eine vergrößerte Detailansicht des Bereichs X in Fig. 3,
- Fig. 6: eine verkleinerte Darstellung eines ebenen Blechzuschnittes für die Herstellung des erfindungsgemäßen Halteelementes in der Ausführungsform nach Fig. 1 bis 5,
- Fig. 7: einen Halblängsschnitt einer zweiten Ausführungsform der erfindungsgemäßen Anschlußvorrichtung,

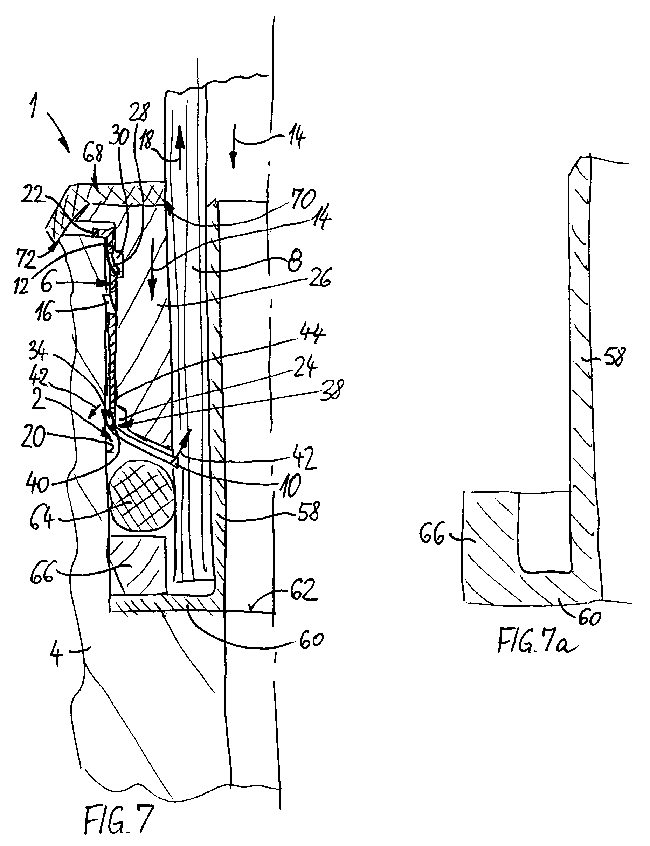

- Fig. 7 a: ein Einzelteil der Ausführung nach Fig. 7 in einer Ausführungsvariante,

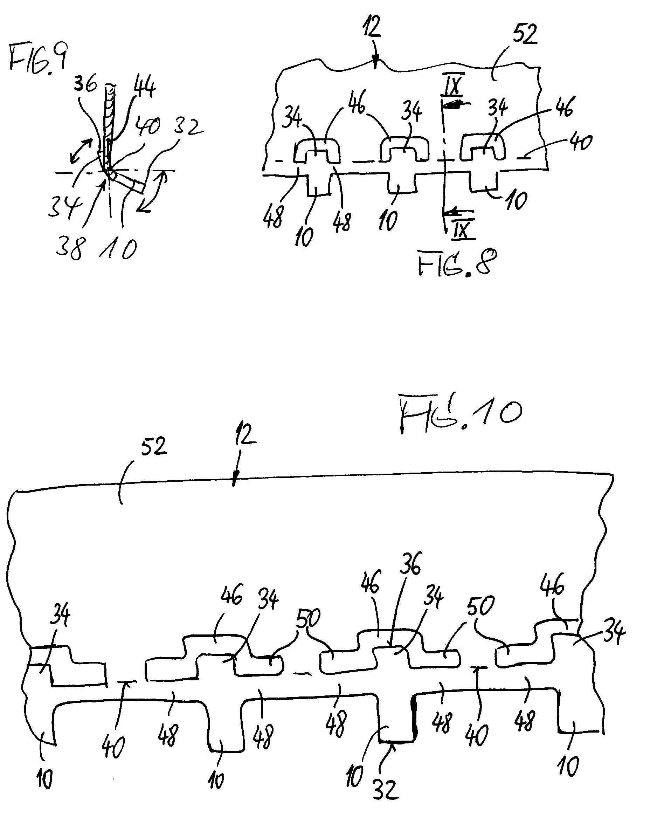

- Fig. 8: einen Ausschnitt eines Blechzuschnittes für das in Fig. 7 verwendete Halteelement,
- Fig. 9: einen Schnitt IX - IX gemäß Fig. 8 und
- Fig. 10: eine vergrößerte Teilansicht eines Bereichs eines ebenen Blechzuschnittes für das Halteelement in einer vorteilhaften Weiterbildung ausgehend von Fig. 8.

In den verschiedenen Figuren der Zeichnung sind gleiche Teile stets mit den gleichen Bezugszeichen versehen und werden daher in der Regel auch jeweils nur einmal beschrieben.

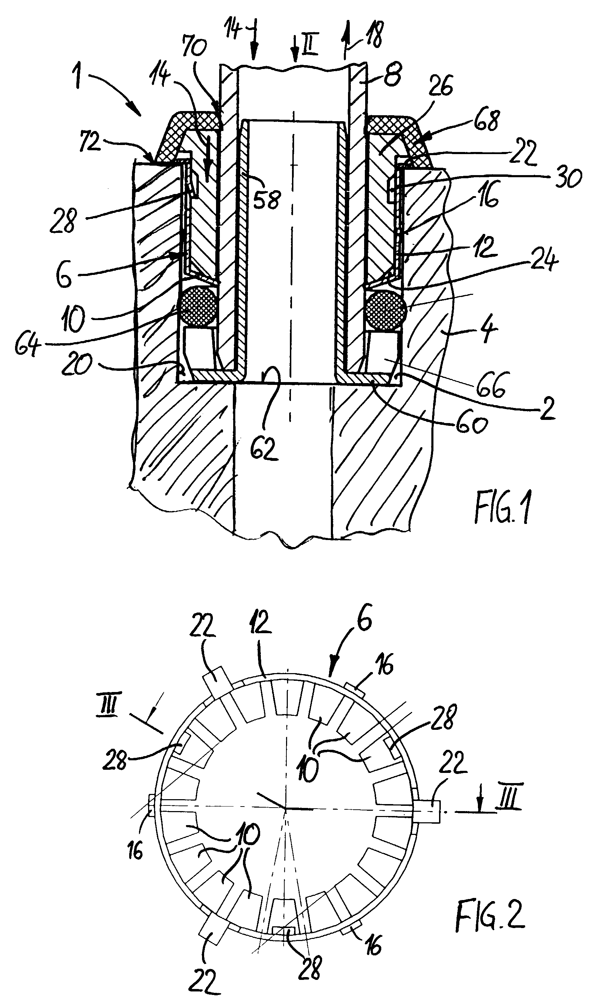

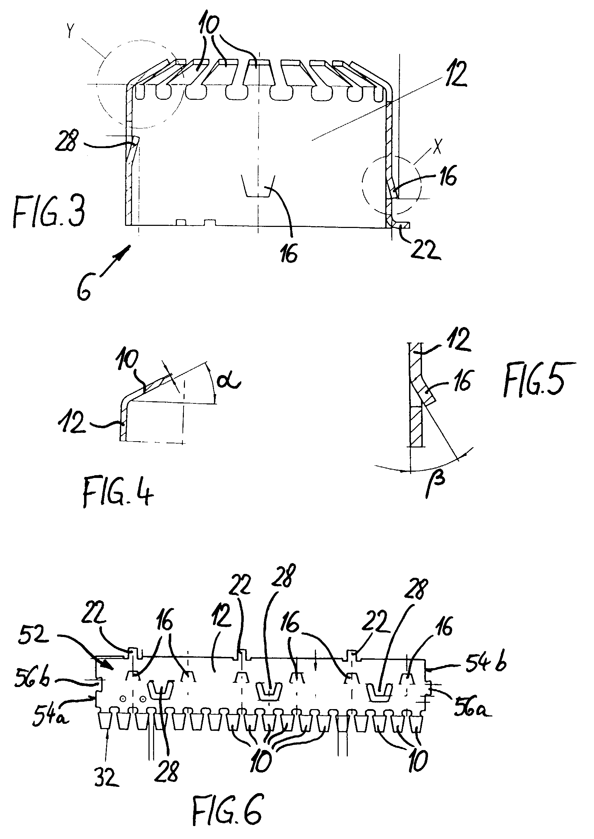

Wie sich zunächst aus Fig. 1 und 7 jeweils ergibt, weist eine Anschlußvorrichtung 1 ein in eine Aufnahmebohrung 2 eines Gehäuseteils 4 einzusetzendes Haltelement 6 auf. Dieses Halteelement 6 weist seinerseits eine Vielzahl von über den Umfang gleichmäßig verteilt angeordneten, widerhakenartig in den zum Einstecken einer Rohrleitung 8 vorgesehenen Öffnungsquerschnitt ragenden, metallischen Klammerelement 10 auf. Wie sich aus Fig. 2 und 6 ergibt, handelt es sich beim dargestellten Ausführungsbeispiel um eine Anzahl von achtzehn Klammerelementen 10, worauf die Erfindung jedoch nicht beschränkt ist.

Erfindungsgemäß ist vorgesehen, daß das Halteelement 6 als einstückiges, im wesentlichen hülsenförmiges Metallblechformteil mit einem etwa hohlzylindrischen, einstückig mit den Klammerelementen 10 verbundenen Basisteil 12 ausgebildet ist. Dabei erstrecken sich die Klammerelemente 10 zum insbesondere formschlüssigen oder zumindest kraftformschlüssigen Eingreifen in die Rohrleitung 8 ausgehend von dem Basisteil 12 zungenartig schräg in Rohr-Einsteckrichtung (Pfeil 14) sowie radial nach innen. Gemäß Fig. 4 ist die Schrägstellung der Klammerelemente 10 derart, daß sie in einem unverformten, entspannten Zustand (ohne eingesteckte Rohrleitung 8) jeweils mit der senkrecht zur Steckachsrichtung verlaufenden Querebene einen spitzen Winkel α einschließen, der bevorzugt etwa im Bereich von 20° bis 30° liegt.

Um das erfindungsgemäße Halteelement 6 auch in innenseitig glattwandige Aufnahmebohrungen 2 einsetzen und sicher haltern zu können, weist der Basisteil 12 mehrere, wie dargestellt beispielsweise sechs über den Umfang gleichmäßig verteilt angeordnete, etwa U-förmig freigeschnittene oder durch entsprechende Ausnehmungen freigesparte Haltezungen 16 auf, die sich jeweils widerhakenartig schräg nach außen und in die der Einsteckrichtung 14 entgegengesetzte Löserichtung (Pfeil 18) gegen die glattwandige, zylindrische Innenumfangsfläche 20 der Aufnahmebohrung 2 erstrecken. Gemäß Fig. 5 verlaufen die Haltezungen 16 im nicht eingesetzten Zustand des Halteelementes 6, d. h. im entspannten, nicht elastisch verformten Zustand, in einem spitzen Winkel β zur Steckachsrichtung nach außen, wobei der Winkel β etwa im Bereich von 30° bis 60° liegt. Dabei entspricht der Außendurchmesser des Basisteils 12 etwa dem Innendurchmesser der Aufnahmebohrung 2 bzw. ist geringfügig kleiner, so daß das Halteelement 6 unter elastischer Verformung der Haltezungen 16 in die Aufnahmebohrung einpreßbar ist. Das Halteelement 6 sitzt dann im wesentlichen spielfrei und über die Haltezungen 16 fixiert in der Aufnahmebohrung 2. Dabei ist es zudem vorteilhaft, wenn der Basisteil 12 auf seiner dem Klammerelement 10 axial gegenüberliegenden Seite mindestens ein radial nach außen ragendes, bevorzugt zungenartiges Einsetz-Begrenzungselement 22 zur Auflage auf dem Öffnungsrand der Aufnahmebohrung 2 aufweist. Bei den dargestellten Ausführungsbeispielen sind mehrere, insbesondere drei Einsetz-Begrenzungselemente 22 in einer radialsymmetrischen Verteilung vorgesehen.

Durch die beschriebene Ausgestaltung sitzt das eingesetzte Halteelement 6 dauerhaft ortsfest in der Aufnahmebohrung 2, so daß trotz der durchgehend glatten, zylindrischen Innenumfangsfläche 20 eine gute Halterung der Rohrleitung 8 in der Aufnahmebohrung 2 gewährleistet werden kann, und zwar vor allem dann, wenn das Gehäuseteil 4 im Bereich der Aufnahmebohrung 2 aus Kunststoff besteht.

In bevorzugter Ausgestaltung der Erfindung ist ein derart in axialer Richtung verschiebbar innerhalb eines zwischen dem Halteelement 6 und der Rohrleitung gebildeten Ringraumes 24 angeordnetes, im wesentlichen hülsenförmiges Löseelement 26 vorgesehen, daß durch axiales Verschieben des Löseelementes 26 in Einsteckrichtung 14 die Klammerelemente 10 zur Freigabe der Rohrleitung 8 radial spreizbar sind. Das bevorzugt als Kunststoff-Formteil ausgebildete Löseelement 26 ist bevorzugt durch einfaches Einstecken in das Halteelement 6 montierbar, wobei über Rastmittel eine Sicherung gegen Lösen bzw. Herausfallen erreicht wird. Hierzu weist das Halteelement 6 im Bereich des Basisteils 12 etwa U-förmig freigeschnittene oder freigesparte Sicherungszungen 28 auf, die schräg in Einsteckrichtung 14 und radial nach innen in eine ringnutartige Ausnehmung 30 des Löseelementes 26 eingreifen. Diese Ausnehmung 30 ist in axialer Richtung so bemessen, daß die Verschiebbarkeit des Löseelementes 26 zum Lösen der Rohrleitung 8 gewährleistet ist.

In den Fig. 7 bis 10 ist eine besonders vorteilhafte Weiterbildung der Erfindung veranschaulicht, wobei zunächst gleiche Teile wie in Fig. 1 bis 6 mit den gleichen Bezugszeichen versehen sind und deshalb nicht nochmals beschrieben werden. Zudem sind in den Fig. 8 und 10 der Einfachheit halber bestimmte Bestandteile nicht eingezeichnet (beispielsweise Ziffern 16, 22, 28)

Bei dieser vorteilhaften Ausführungsform geht vorzugsweise jedes Klammerelement 10 auf seiner dem freien, zur Halterung der Rohrleitung 8 dienenden Ende 32 gegenüberliegenden Seite in ein ebenfalls zungenartiges, sich schräg in Löserichtung 18 und radial nach außen gegen die Innenumfangsfläche 20 der Aufnahmebohrung 2 erstreckendes Arretierelement 34 über. Jedes dieser Arretierelemente 34 wirkt somit mit seinem freien Ende 36 gegen die Innenumfangsfläche 20. Hierbei ist erfindungsgemäß jedes Klammerelement 10 zusammen mit dem zugehörigen Arretierelement 34 um eine etwa in Umfangsrichtung verlaufende, durch eine Anbindungsstelle 38 zum Basisteil 12 bestimmte Drehachse 40 (Fig. 7 und 9) derart verdrehbar, daß durch eine Bewegung der Rohrleitung 8 in Löserichtung 18 über die auf der Rohrleitung aufliegenden Klammerelemente 10 die Arretierelemente 34 wippenartig verschwenkt und gegen die Innenumfangsfläche 20 der Aufnahmebohrung 2 gedrückt werden. Diese Arretierfunktion ist in Fig. 7 durch zwei Pfeile 42 veranschaulicht. Auch bei dieser Ausführungsform ist eine Lösbarkeit der Rohrleitung 8 gewährleistet, indem das Löseelement 26 in Einsteckrichtung 14 gegen die Klammerelemente 10 verschoben wird, so daß eine zu der Pfeilrichtung 42 gemäß Fig. 7 umgekehrte Verdrehung der Klammer- und Arretierelemente 10,34 zur inneren und äußeren Freigabe erfolgt. Diese Verdrehbarkeit in die beiden entsprechenden Richtungen ist in Fig. 9 durch Doppelpfeile veranschaulicht.

Gemäß Fig. 7 liegt die Drehachse 40 der kombinierten Klammer- und und Arretierelemente 10,34 in radialer Richtung geseheninnerhalb der äußeren Hälfte des zwischen der Innenumfangsfläche 20 der Aufnahmebohrung 2 und der Rohrleitung 8 gebildeten Ringraums 24. Bevorzugt liegt das Verhältnis des radialen Abstandes der Drehachse 40 von der Innenumfangsfläche 20 einerseits und von der Rohrleitung 8 andererseits bei etwa 1/3 zu 2/3. Die Klammer- und Arretierelemente 10,34 sind in einem entsprechenden Bereich ihrer Längserstreckung einstückig mit einem Hülsenabschnitt 44 des Halteelementes 6 verbunden.

Wie sich aus Fig. 8 ergibt, sind die zungenartigen Arretierelemente 34 aus dem Metallblech durch U-förmige Freischnitte oder Ausschnitte 46 gebildet, so daß im Übergangsbereich zwischen jedem Arretierelement 34 und dem zugehörigen Klammerelement 10 zwei seitlich gegenüberliegende, die Achse 40 definierende Verbindungsstege 48 gebildet sind. Die Verdrehbarkeit läßt sich noch gemäß Fig. 10 dadurch verbessern, daß die U-förmigen Ausschnitte 46 im an die Verbindungsstege 48 angrenzenden Bereich durch jeweils zwei in entgegengesetzte Richtungen voneinander wegweisende Ausschnitte 50 derart vergrößert, d. h. insgesamt etwa hut- oder Ω-förmig ausgebildet sind, daß eine Verlängerung der Verbindungsstege 48 und dadurch eine Erhöhung der Drehbeweglichkeit der Klammer- und Arretierelemente 10,34 erreicht wird.

In Fig. 6 ist für das erste Ausführungsbeispiel nach Fig. 1 bis 5 ein ursprünglich ebener, länglicher, im wesentlichen rechteckiger Blechzuschnitt 52 dargestellt, der mittels eines geeigneten Stanzwerkzeugs sehr preiswert in einem Arbeitsgang ausgestanzt werden kann. Dieser Blechzuschnitt 52 wird nachfolgend in eine Hülsenform gebogen, wobei zwei Stoßkanten 54 a und 54 b insbesondere formschlüssig oder auf andere geeignete Weise miteinander verbunden werden. In der dargestellten Ausführungsform handelt es sich um eine Art Schwalbenschwanzverbindung, wobei ein sich erweiternder Ansatz 56 a in eine entsprechend geformte Ausnehmung 56 b der anderen Stoßkante eingreift. Zusätzlich kann beispielsweise durch einen Körnerschlag noch eine Vernietung erfolgen. Darüber hinaus sind aber auch beliebige andere Verbindungsarten möglich, beispielsweise Stoffschluß (Schweißen, Kleben oder dergleichen).

Es sollen nun noch einige vorteilhafte Ausgestaltungsmerkmale beschrieben werden, die bei beiden Ausführungsformen gleichermaßen vorhanden sind. So ist innerhalb der Aufnahmebohrung 2 des Gehäuseteils 4 eine koaxiale Stützhülse 58 angeordnet, die zum die Rohrwandung radial abstützenden Eingreifen in die eingesteckte Rohrleitung 8 dient. Vorzugsweise liegt die Stützhülse 58 mit einem sich radial nach außen erstreckenden Flanschabschnitt 60 auf einer die Aufnahmebohrung 2 im Querschnitt verengenden Stufenfläche 62 auf. Zweckmäßigerweise sitzt dieser Flanschabschnitt 60 auch in radialer Richtung im wesentlichen spielfrei in der Aufnahmebohrung 2 (Fig. 7), so daß eine Zentrierung der Stützhülse 58 erreicht wird.

Aufgrund der erfindungsgemäßen Ausgestaltung des Halteelementes 6 sind die Funktionen "Halten und Dichten" bei der erfindungsgemäßen Anschlußvorrichtung 1 voneinander getrennt. Zur Abdichtung des inneren Systemdrucks nach außen ist innerhalb der Aufnahmebohrung 2 axial zwischen dem Halteelement 6 und der Stufenfläche 62 bzw. dem darauf aufliegenden Flanschabschnitt 60 der Stützhülse 58 ein elastischer Dichtring 64 angeordnet. Zweckmäßigerweise ist zudem zwischen dem Dichtring 64 und der Stufenfläche 62 bzw. dem Flanschabschnitt 60 ein Stützring 66 angeordnet.

Schließlich ist als Abdichtung gegen von außen eindringenden Schmutz und dergleichen eine insbesondere elastische Schutzkappe 68 vorgesehen, die den Mündungsbereich der Aufnahmebohrung 2 von außen überdeckt. Dabei weist die Schutzkappe 68 eine zentrische Öffnung 70 mit einem Öffnungsrand zur dichtenden Anlage am Außenumfang der Rohrleitung 8 sowie einen äußeren Dichtrand 72 zur dichtenden Auflage auf dem Gehäuseteil 4 auf.

Gemäß Fig. 7 a kann die Stützhülse 58 auch zusammen mit dem Stützring 66 und dem Flanschabschnitt 60 einstückig, insbesondere als Kunststoff-Formteil, ausgebildet sein.

Die Erfindung ist nicht auf die dargestellten und beschriebenen Ausführungsbeispiele beschränkt, sondern umfaßt auch alle im Sinne der Erfindung gleichwirkenden Ausführungen. Ferner ist die Erfindung bislang auch noch nicht auf die im Anspruch 1 definierte Merkmalskombination beschränkt, sondern kann auch durch jede beliebige andere Kombination von bestimmten Merkmalen aller insgesamt offenbarten Einzelmerkmalen definiert sein. Dies bedeutet, daß grundsätzlich praktisch jedes Einzelmerkmal des Anspruchs 1 weggelassen bzw. durch mindestens ein an anderer Stelle der Anmeldung offenbartes Einzelmerkmal ersetzt werden kann. Insofern ist der Anspruch 1 lediglich als ein erster Formulierungsversuch für eine Erfindung zu verstehen.

## Patentansprüche

1. Anschlußvorrichtung für Rohrleitungen, mit einem in einer Aufnahmebohrung (2) eines Gehäuseteils (4) angeordneten bzw. anzuordnenden Halteelement (6) mit über den Umfang verteilt angeordneten, widerhakenartig in den zum Einstecken der Rohrleitung (8) vorgesehenen Öffnungsquerschnitt ragenden, metallischen Klammerelemente (10),
**dadurch gekennzeichnet,** daß das Halteelement (6) als einstückiges, im wesentlichen hülsenförmiges Metallblechformteil mit einem im wesentlichen hohlzylindrischen, einstückig mit den Klammerelementen (10) verbundenen Basisteil (12) ausgebildet ist.

2. Anschlußvorrichtung nach Anspruch 1,
**dadurch gekennzeichnet,** daß sich die Klammerelemente (10) zum insbesondere formschlüssigen oder kraftformschlüssigen Halten der Rohrleitung (8), ausgehend von dem Basisteil (12) zungenartig schräg in Rohr-Einsteckrichtung (14) und radial nach innen erstrecken.

3. Anschlußvorrichtung nach Anspruch 1 oder 2,
**dadurch gekennzeichnet,** daß der Basisteil (12) zur insbesondere formschlüssigen oder kraftformschlüssigen Halterung in der eine im wesentlichen glattwandige zylindrische Innenumfangsfläche (20) aufweisenden Aufnahmebohrung (2) freigeschnittene oder freigesparte Haltezungen (16) aufweist, die sich widerhakenartig schräg nach außen und in die der Einsteckrichtung (14) entgegengesetzte Löserichtung (18) gegen die Innenumfangsfläche (20) der Aufnahmebohrung (2) erstrecken.

4. Anschlußvorrichtung nach Anspruch 3,
**dadurch gekennzeichnet,** daß der Basisteil (12) des Halteelementes (6) einen Außendurchmesser aufweist, der etwa dem Innendurchmesser der Aufnahmebohrung (2) entspricht.

5. Anschlußvorrichtung nach einem der Ansprüche 1 bis 4,
**dadurch gekennzeichnet,** daß der Basisteil (12) auf seiner den Klammerelementen (10) gegenüberliegenden Seite mindestens ein radial nach außen ragendes Einsetz-Begrenzungselement (22) zur Auflage auf dem Öffnungsrand der Aufnahmebohrung (2) aufweist.

6. Anschlußvorrichtung nach einem der Ansprüche 1 bis 5,
**gekennzeichnet durch** ein derart axial verschiebbar innerhalb eines zwischen dem Halteelement und der Rohrleitung (8) gebildeten Ringraumes (24) angeordnetes, im wesentlichen hülsenförmiges Löseelement (26), daß durch axiales Verschieben des Löseelementes (26) in Einsteckrichtung (14) die Klammerelemente (10) zur Freigabe der Rohrleitung (8) radial spreizbar sind.

7. Anschlußvorrichtung nach Anspruch 6,
**dadurch gekennzeichnet,** daß das Halteelement (6) im Bereich des Basisteils (12) freigeschnittene oder freigesparte Sicherungszungen (28) aufweist, die zur Sicherung des Löseelementes (26) schräg in Einsteckrichtung (14) und radial nach innen in eine Ausnehmung (30) des Löseelementes (26) eingreifen.

8. Anschlußvorrichtung nach einem der Ansprüche 1 bis 7,
**dadurch gekennzeichnet,** daß jedes Klammerelement (10) auf seiner dem freien, zur Halterung der Rohrleitung (8) dienenden Ende (32) gegenüberliegenden Seite in ein zungenartiges, sich schräg in Löserichtung (18) und radial nach außen gegen die Innenumfangsfläche (20) der Aufnahmebohrung (2) erstreckendes Arretierelement (34) übergeht, wobei jedes Klammerelement (10) mit dem zugehörigen Arretierelement (34) um eine etwa in Umfangsrichtung verlaufende, durch eine Anbindungsstelle (38) zum Basisteil (12) bestimmte Drehachse (40) derart verdrehbar ist, daß durch eine Bewegung der Rohrleitung (8) in Löserichtung (18) über die Klammerelemente (10) die Arretierelemente (34) gegen die Innenumfangsfläche (20) der Aufnahmebohrung (2) gedrückt werden.

9. Anschlußvorrichtung nach Anspruch 8,
**dadurch gekennzeichnet,** daß die Drehachse (40) der kombinierten Klammer- und Arretierelemente (10,34) ausgehend vom radial mittigen Bereich des zwischen der Innenumfangsfläche (20) der Aufnahmebohrung (2) und der Rohrleitung (8) gebildeten Ringraumes (24) in radialer Richtung nach außen versetzt liegt, so daß das Längenverhältnis jedes Arretierelementes (34) zum zugehörigen Klammerelement (10) insbesondere bei etwa 1/3 zu 2/3 liegt.

10. Anschlußvorrichtung nach Anspruch 8 oder 9,
**dadurch gekennzeichnet,** daß die zungenartigen Arretierelemente (34) aus dem Metallblech durch U-förmige Freischnitte oder Ausschnitte (46) gebildet sind, wobei im Übergangsbereich zwischen jedem Arretierelement (34) und dem zugehörigen Klammerelement (10) zwei seitlich gegenüberliegende, die Drehachse (40) definierende Verbindungsstege (48) gebildet sind.

11. Anschlußvorrichtung nach Anspruch 10,
**dadurch gekennzeichnet,** daß die U-förmigen Ausschnitte (46) im an die Verbindungsstege (48) angrenzenden Bereich durch jeweils zwei in entgegengesetzte Richtungen voneinander weg weisende Ausschnitte (50) derart vergrößert sind, daß eine Verlängerung der Verbindungsstege (48) und dadurch eine Erhöhung der Drehbeweglichkeit der Klammer- und Arretierelemente (10,34) erreicht wird.

12. Anschlußvorrichtung nach einem der Ansprüche 1 bis 11,
**dadurch gekennzeichnet,** daß das Halteelement (6) aus einem ursprünglich ebenen, länglichen, im wesentlichen rechteckigen Blechzuschnitt (52) in eine Hülsenform gebogen ist und zwei Stoßkanten (54 a, b) insbesondere formschlüssig miteinander verbunden sind.

13. Anschlußvorrichtung nach einem der Ansprüche 1 bis 12,
**gekennzeichnet durch** eine innerhalb der Aufnahmebohrung (2) des Gehäuseteils (4) angeordnete Stützhülse (58) zum die Rohrwandung radial abstützenden Eingreifen in die eingesteckte Rohrleitung (8), wobei die Stützhülse (58) vorzugsweise mit einem sich radial nach außen erstreckenden Flanschabschnitt (60) auf einer die Aufnahmebohrung (2) im Querschnitt verengenden Stufenfläche (62) aufliegt.

14. Anschlußvorrichtung nach einem der Ansprüche 1 bis 13,
**gekennzeichnet durch** mindestens einen innerhalb der Aufnahmebohrung (2) axial zwischen dem Halteelement (6) und einer die Aufnahmebohrung (2) im Querschnitt verengenden Stufenfläche (62) angeordneten, elastischen Dichtring (64).

15. Anschlußvorrichtung nach Anspruch 14,
**dadurch gekennzeichnet,** daß zwischen dem Dichtring (64) und der Stufenfläche (62) ein Stützring (66) angeordnet ist.

16. Anschlußvorrichtung nach einem der Ansprüche 1 bis 15,
**gekennzeichnet durch** eine als Schmutzdichtung vorgesehene Schutzkappe (68) zum Abdecken des Mündungsbereichs der Aufnahmebohrung (2), wobei die Schutzkappe (68) eine zentrische Öffnung (70) mit einem Öffnungsrand zur dichtenden Anlage am Außenumfang der Rohrleitung (8) sowie einen äußeren Dichtrand (72) zur dichtenden Auflage auf dem Gehäuseteil (4) aufweist.
